# EUROPEAN PATENT APPLICATION

(11) **EP 1 717 204 A1**
(43) Date of publication of application: **02.11.2006**
(21) Application number: 06075960.2
(22) Date of filing: 27.04.2006
(51) Int. Cl.: C02F 1/04, A23C 1/04, A23C 1/12

(54) **Method and device for increasing the dry matter contents of a biological fluid**

(30) Priority: 27.04.2005 NL 1028884
(71) Applicant: Tabagh A.G., 2984 Fiesch (CH); Laimbock, Johannes Franciscus, NL-7346 AC Hoog Soeren (NL)
(72) Inventor: Laimbock , Johannes Franciscus, 7346 AC Hoog Soeren (NL)
(74) Representative: Grootscholten, Johannes A.M.

(57) **Abstract**

The present invention relates to a method for increasing the dry matter content of a biological fluid. The method comprises providing a biological fluid, heating the biological fluid, while forming water vapour and a concentrate of the biological fluid, transporting away of the concentrate, characterized in forming of a water condensate from the water vapour and transporting away of the water condensate for further processing to a water containing product. The invention also relates to a device for increasing the dry matter content of a biological fluid. The invention also relates to use of water vapour, obtainable from a concentration process of a biological fluid, for producing a water product.

## Description

The present invention according to a first aspect relates to a method for increasing the dry matter content of a biological fluid, in particular (concentrated) milk or a plant juice.

According to a further aspect the invention relates to a device for increasing the dry matter content of a biological fluid.

According to another aspect the invention relates to a water condensate obtained in the method according to the invention, and the use of water vapour derived from a biological fluid for producing a water product.

Water is the general solvent in living creatures and forms a major component of the chemical composition of all living organisms. As such, biological fluids, meaning fluids that are obtained as an extract or excretion product from an organism, for their major part are also composed of water.

Several biological fluids are processed in the flood industry to consumption products. Such as milk and plant juices and derivatives thereof, such as fruit juices, molasse and/or thin juice. During the processing of these biological fluids, the dry matter content of the biological fluids is often increased, for example to obtain a product with a longer self life, to make the transport of the nutrients, which are mainly present in the dry matter fraction of the biological fluids, cheaper and/or easier, due to the volume decrease, or to obtain one or more solids from the biological fluid. Examples are the production of concentrated fruit juices, concentrated coffee milk, whey powder, milk powder and the sugar production from thin juice (obtained from molasse) from sugar beets or sugarcane.

During the increase of the dry matter content of the biological fluid, use is often made of an evaporation process, wherein water vapour is released from the biological fluid, which causes an increase of the dry matter content.

For performing such an elevation of dry matter content of a biological fluid on an industrial scale, several devices are known. Examples are thin film evaporators, such as evaporators with a plurality of plates, a centritherm evaporator (spinning-cone-colomn), a band dryer or a roller dryer. Also, during spray drying of a (concentrated) milk fluid, the dry matter content of the (concentrated) milk is increased.

In the present practice of using such devices in the food industry, the water vapour which is formed, is blown into the atmosphere, or after cooling to a condensate is wasted on the sewer or the surface water. Because milk in general contains about 87% water, in doing this, enormous amounts of water vapour are drained off as a waste stream in the atmosphere or the surface water or the sewer. In many countries, amongst others The Netherlands, draining off of industrial process water on the surface water is not permitted. Besides, draining off of large volumes of process water on the sewer is associated with considerable costs. It is not unlikely that for draining of water vapour in the atmosphere, in the future payment of waste taxes will also be required. Therefore, it is of benefit to reduce the amount of waste water that is formed during processing of several biological fluids.

The present invention was made from the observation that water vapour, which is formed in the food industry from biological fluids, is of sufficient quality to be processed further to an economically interesting water product. For this, one could think about drinking water, that is suitable for animal and/or human consumption, and water with a small conductivity and as such a large electrical resistance, due to a low ionic strength, that could find application within the semi-conductor industry and the pharmaceutical industry, or is suitable as consumption water for kidney patients, or for the preparation of baby foods. This observation was not made before in the prior art, as is clear from the present practice, in which water vapour is considered a waste product and therefore is drained in the atmosphere and/or the surface water or the sewer.

Without wishing to be bound by this assumption, it is assumed that processing of the evaporation water to a water product thus far was considered as economically uninteresting, due to a lack of appreciation of the quality of the water condensate, that can be formed during the processing of biological fluids.

It has now been found that condensation of the water vapour provides a water condensate with a quality that is higher than the quality of most surface waters, which are used for the production of drinking water. Due to this, it is possible to produce drinking water from this water condensate with relatively small efforts.

The invention therefore relates to a method for increasing the dry matter content of a biological fluid according to claim 1, wherein the water vapour formed is used for the production of a water product. Such a method has less waste products. Furthermore, an interesting water product can be obtained efficiently, as the water condensate in general is of better quality than most of the surface water and soil water, that is employed for producing water products in the

### prior art.

In this context it must be considered that in an increasing number of areas the quality of the surface and/or soil water is deteriorating, due to, amongst others, dumping of chemicals which presents a load on the environment, salination due to an increase of the sea level, possibly in combination with a decreasing level of the soil and (over extensive) fertilisation. Due to this, in some areas it not possible for waterworks companies to comply with for instance the European requirements in relation to the acceptable levels of nitrate.

With the term "biological fluid" is meant a fluid with a biological source and/or function, which is obtained as an extract or an excretion product from an organism. The biological fluids as such can be present in certain organs or parts of an organism, or can be excreted by organs or parts of an organism. The biological fluids may be obtained directly from an organism, or could have been submitted to some form of processing, such as concentration. Examples of biological fluids are plant juices, such as from aerial and/or subsurface plant parts, for example fruit juices, vegetable juices, or thin juice from sugar beets; fluid milk products, such as milk, concentrated milk, whey (fluid) or whey permeate (fluid).

Heating of the biological fluid can proceed with methods known in the field, that are suitable for forming water vapour from a biological fluid. Preferably the biological fluid is heated to a temperature between 40 and 200°C, more preferably between 60 and 120°C, and most preferable between 70 and 80°C. In a preferred embodiment of the method according to the invention, heating of the biological fluid takes place under a sub-atmospheric pressure, such as a pressure between 0.1-0.9 atm., more preferably 0.1-0.7 atm., most preferably 0.1-0.5 atm..

The term "water vapour" comprises water in gas form and also floating fluid water particles, including steam.

The concentrate of the biological fluid has an elevated dry matter content relative to the biological fluid provided, due to water evaporation from the biological fluid.

The concentrate is transported away in a way that is known in the field. The exact way will depend on the specific installation, wherein the biological fluid is heated. Suitably the concentrate is transported away by means of pumping through a pipe, if the concentrate is a fluidum, such as a fluid or a slurry. If the concentrate is a solid, it can be transported away suitably by means of a transport band, a jacobsladder, a transport screw or by blowing it through piping, in case of a free flowing powder.

The water condensate can be formed from the water vapour in any way that is known to the skilled person. Examples are cooling, for example in a condenser, such as a plate condenser, a pipe condenser; a static mixer and/or by means of pressure elevation.

Transporting away of the water condensate for further processing to a water product can be done in a way that is known in the field, for transporting fluid media, such as pumping through piping. Of importance is that the water condensate is transported away for further processing and not to be drained off on the surface water/sewer.

In a preferred embodiment of the method according to the invention the processing of the water condensate comprises purification, preferably to the standards which apply for drinking water. In this embodiment the water condensate will be transported away to a purification installation, either directly or indirectly. Possibly the water condensate, before being transported away to the purification installation, is first transported away to a buffer basin, where it can be stored before purification.

The purification of the water condensate can proceed in a way that is known in the field of water purification. In general the water condensate is of a higher quality than surface water, because it is obtained from an evaporation process. The purification technique can be selected from the group of filtration, ultra filtration, micro filtration, nano filtration, evaporation, freeze condensation, sedimentation, demineralisation, osmosis and treatment on active coal or combinations thereof. These techniques are well known in the art and the person skilled in the art will know how to use these for the purification of the water condensate, to make it suitable for a specific purpose, for instance for serving as drinking water. Apart from that, the water condensate can also be aerated and/or a disinfecting compound may be added, such as ozone, lactic acid or a chloro compound.

Within the present invention water vapour can suitably be formed by concentrating (damping in) of a biological fluid in a film evaporator, such as a plate evaporator with multiple plates, a centriterm evaporator, a band dryer or a roller dryer. Film evaporators are generally known in the art and it will be clear to the skilled person how to concentrate a biological fluid with the aid of a film evaporator, in particular as specified above, analogous to concentrating milk whey and/or plant juices, such as presently frequently employed in the food industry.

Alternatively, forming of water vapour can be brought about by spray drying the biological fluid. Spray drying is in general suitable for concentrating fluid media with a dry matter content of 30-60%, to a concentrate with a dry matter content of 94-98%. When the biological fluid naturally has a lower dry matter content, before spray drying, it can be concentrated to a dry matter content within the range mentioned. This can for instance be achieved by using a film evaporator.

In a number of applications it is possible that water strange compounds are present in the gas phase, that comprises the water vapour. In such a case, for instance when spray drying the biological fluid, it can be of benefit to separate the water strange compounds from the water in the gas phase, that comprises the water vapour, before forming the water condensate. This results in an increased quality of the water condensate and can facilitate further processing, such as purification of the water condensate. Removing of water strange compounds, such as (micro) powder particles, can be brought about for instance with the aid of a number of cyclones or a number of filters, for example electrostatic filters, or a combination of a number of cyclones and a number of filters. When a combination of a number of cyclones and a number of filters is used, it is preferred to pass the gas phase, that comprises the water vapour, first through a number of cyclones and after that through a number of filters. Alternatively or in addition, it is possible to remove water strange compounds, such as (micro) powder particles or dust particles from the water condensate, by means of filtration, ultra filtration, micro filtration, or a combination thereof.

Within the scope of the present invention water strange compounds comprise alle compounds with a molecular formula other then that of water (H₂O), irrespective of their physical state (such as solid, fluid, gas or vapour). Water strange compounds can in particular have a complex chemical formula and can be mixtures of compounds.

Water strange compounds according to a further embodiment of the method according to the present invention, can be separated from water in the gas phase (including vapour form) on the basis of a difference in the boiling point of the water strange compound and water. This can for instance be done with the aid of fractionated distillation, or rectification. For the fractionated distillation, or rectification, the gas phase, comprising the water vaour, can for instance be passed through a rectification column.

In one embodiment which is in particular preferred, separation of water and a number of water strange compounds comprises a combination of separation of (micro) powder particles and separation on the basis of a difference in boiling point. Preferably (micro) powder particles are separated before separation on the basis of a difference in boiling point.

According to a preferred embodiment of the method according to the invention, the water condensate is processed to drinking water. The drinking water is at least suitable for consumption by livestock and is preferably suitable for human consumption. The quality requirements, to which water must comply in order to be suitable for human consumption, are known for the person skilled in the art of drinking water purification, and can differ per country. In general the drinking water must comply to the legal requirements in relation to the presence of microorganisms, chemical pollution and/or oxygen content. Most preferably the water condensate is processed to drinking water that is suitable for human consumption according to the directives as prepared by the European Committee or the World Health Organisation.

According to a further preferred embodiment of the method according to the present invention processing of the water condensate comprises packaging of the water condensate. The water condensate may be packed in consumer packages, such as bottles, for instance made from glass, or bottles made from one or multiple plastic layers, packs, cans and other packages, that are presently used to market drinking water, inclusive mineral water. In addition to this the water condensate may be packed in containers, that can contain a large volume, for instance 5-200 liters, and even more, such as for example more than 1000 liters. According to the present invention, packaging also comprises loading of the water condensate in milk transport vehicles or other tank transport vehicles. In this way drinking water can be transported back to livestock farmers, who can use this water as drinking water for their cattle.

Preferably, in the method according to the invention, lactic acid is added to the water condensate to a level that provides an antimicrobial effect. suitable levels for adding lactic acid are between 0.1 and 25 mg/l, preferably 3-10 mg/l. It is known that lactic acid, added within the given levels, provides an antimicrobial effect. Use of lactic acid is preferred over other bacteriostatics, such chlorine or ozone, as it is a compound that naturally is present in the human body. If the water condensate is packed in a bio compostable packing, as such a fully natural degradable product is obtained, that for the major part constitutes of water as a usefully employed waste product.

The biological fluid is preferably a biological consumption fluid. With biological consumption fluid is meant a biological fluid that is suitable for human consumption. Preferably the biological consumption fluid is selected from plant juices and/or milk that is pre-processed or unprocessed. The selection of a biological consumption fluid has the benefit that such fluids are frequently processed in the food industry. Apart from that, the source from which the water condensate is obtained is already suitable for human consumption, because of this obtaining a product that is save for human consumption is easier.

According to a preferred embodiment of the method according to the present invention, processing of the water condensate comprises distribution via a network of piping. If the water condensate is suitable for human consumption, this network of piping can comprise the drinking water network. As such, in the method according to the present invention, the water condensate may be distributed as tap water.

According to an alternative embodiment of the method according to the present invention, processing of the water condensate comprises the essentially dust free packing of the water condensate. As the water condensate is obtained from an evaporation process, it is very suitable to be processed to a water product with a low conductivity, due to the low concentration of dissolved ions. Such water can find application as ultra pure water in the pharmaceutical and semi-conductor industry and medicine. Especially if the water product is applied in the semi-conductor industry, it is preferred that the water comprises as few as possible dust particles.

According to a further preferred embodiment of the method according to the present invention, the concentrate is transported away for further processing to a product. Within the normal practice of the food industry, the product obtained from the concentrate that is transported away will be economically most valuable. If the biological fluid is a fruit juice, the concentrate that is transported away can be processed to a concentrated fruit juice, for instance a packed concentrated fruit juice. If the biological fluid is milk, or a pre-processed milk product, the concentrate which is transported away can be processed to, for example, milk powder, concentrated coffee milk, whey powder etcetera, dependent on the composition of the biological fluid.

According to a further aspect the invention relates to a device for increasing the dry matter content of a biological fluid. The device comprises:
- an evaporation unit, suitable for forming water vapour from a biological fluid; and
- a cooling unit, suitable for forming a water condensate from the water vapour formed in the evaporation unit.
The device is further characterized by a processing unit for processing of the water condensate to a water containing product.

The evaporation unit may be selected from the group of a film evaporator, such as a plate evaporator with multiple plates, a centriterm evaporator (spinning cone column), a band dryer or a roller dryer; or a spray dryer. Such evaporation units are well known within the art and their application for forming a water vapour from a biological fluid will be clear to the skilled person.

The processing unit of the device according to the invention preferably comprises a unit selected from a filtration unit, an ultra filtration unit, a micro filtration unit, a nano filtration unit, a freeze concentration unit, a sedimentation unit, or a demineralisation unit. Such units are suitable for further purification of the water condensate. Their use for this application will be known for the person skilled in the art of water purification.

According to a further preferred embodiment of the device according to the invention, the processing unit comprises an aeration unit. The aeration unit is suitable for dissolving oxygen in the water condensate. It is known that water with a high level of dissolved oxygen is organoleptically sensed as more sparkling. Also many countries have legal requirements with respect to the oxygen level of drinking water. After aeration the water condensate according to a preferred embodiment contains 1.5-4 mg O₂ per liter, or a multitude thereof, such as 4-60 mg per liter. In a alternative embodiment the water condensate comprises oxygen to the saturation level.

Preferably the processing unit comprises a packing unit for packing of the water condensate in consumer packings.

According to a further embodiment of the device according to the present invention, the processing unit comprises a packing unit for dust free packing of the water condensate.

According to a preferred embodiment the device according to the invention comprises a unit for the separation of water and a number of water strange compounds in the gas phase, that comprises the water vapour.

This separation unit according to a further embodiment may be suitable for separating water and a number of water strange compounds in the gas phase on the basis of a difference in the boiling point of the water strange compound and water. For this, use can be made of fractionated distillation or rectification. For fractionated distillation, or rectification, the gas phase, which comprises the water vapour, can for instance be passed to a rectification column.

According to a further preferred embodiment the separation unit comprises a combination of a unit for the separation of (micro) powder particles and a unit for the separation on the basis of a difference in boiling point. Preferably (micro) powder particles are removed before separation on the basis of a difference in boiling point takes place.

According to a further aspect the present invention relates to the water condensate, obtainable in the method according to the invention.

According to a further aspect the invention further relates to the use of water vapour, obtained from a concentration process of a biological fluid, for producing a water product. So far in the prior art such a water vapour is only considered as a waste product, and therefore discarded either in the atmosphere, or on the surface water/sewer. The useful use of such a water vapour however, within the use according to the present invention, was heretofore unforeseen.

According to a preferred embodiment of the use according to the present invention, the biological fluid is a biological consumption fluid, as defined above. Preferably the biological consumption fluid is selected from plant juices, such as milk or fruit juices, or vegetable juice. Withing the term milk also a processed milk product, such as a concentrated milk fluid, must be understood.

Preferably the water product is drinking water, that in particular is suitable for human consumption. Such a drinking water suitable for human consumption complies most preferably to the guidelines of the European Committee or the World Health Organisation.

According to a further preferred embodiment according to the invention, the water product is water with a conductivity lower than 2 µS/cm (t=20°C), preferably lower than 0.5 µS/cm (T=20°C).

The invention will be further illustrated with the attached examples.

### Examples

### Example 1. Drinking water made from the process water released during the production of milk powder - general - bulk - soft drinks

100,000 kg milk with 87% water (= 87,000 kg water) is concentrated in a two-steps damping-in installation at a temperature of 80°C and a vacuum of 0,5 bar, of which 43,000 kg water is damped off, and the concentrate containing:
- 13,000 kg milk constituents and
- 44,000 kg water,
is sprayed via a rotating nozzle in the top of a spray drying tower, that can also be mixed with a hot airstream with a temperature of about 210°C, causing the water part of the milk concentrate to evaporate in the hot air, and whereby the mixture of milk particles can be separated in a cyclone from the hot air/water vapour/milk powder mixture, wherein
- the milk particles of the milk powder particles flow to the bottom of the cyclone, and are collected there;
- the hot air is mixed with a small amount of milk powder via the upper exhaust of the cyclone, and horizontally blown to the filters via a strong centrifugal ventilator, where the remaining milk powder particles are collected; and
- the extremely hot air/water vapour mixture released therefrom, is blown through a cooled radiator system and is cooled, whereby the water vapour is transformed to liquid water and dry air is blown into the free air.

### Result:

a) 13,541 kg dry milk powder, whereof 4% is water (541 kg water) ;
b) 43,000 kg water from the condensation process minus the water part in the milk powder of 541 kg results in 42,459 kg water;
c) 44,000 kg original water in concentrate minus 20% loss of 8,800 kg results in 35,200 water.
Total process water production 42,459 + 35,200 = 77,659 kg free process water in storage. So far this amount of process water vapour was blown into the air.

The mentioned amount of water of 77,659 kg is pumped to an aeration reactor, where normal atmospheric air is pumped through the purified/cleaned water to an oxygen level of at least 7 mg/l, from below 2,0 mg/l, where after it is stored in a 90,000 liter tank and where 1 kg calcium hypochloride is added as a disinfectant, while stirring. Next the water is pumped through a 90,000 liter tank, that is filled with active coal for the removal of possible odour, taste and colour, where after it is stored for quality control and transport. The water is transported away in bulk to a soft drink production for mixing with flavours and sweeteners, where after it is carbonised and filled in bio-compostable plastic bottles for transport.

### Example 2. Drinking water made from process water released during the production of whey powder (produced from whey from cheese production) - soft drinks

100,000 kg whey comprising:
- 93,300 kg water; and
- 6,700 kg whey constituents,
is condensed in a two-steps film evaporator to a 40% solution/concentrate, comprising:
- 6,700 kg whey constituents; and
- 10,050 kg water.
During this condensation process 93,300 - 10,050 = 83,250 kg water is released. The concentrate is heated to 200°C and sprayed via a rotating nozzle in a spray tower, where it meets with a hot air stream with a temperature of 200°C, causing the water part of the whey concentrate in this mixture to evaporate. This results in 6,735 kg solid whey powder with a water content of 2%. The air-water concentrate is sucked in a cyclone, whereby
- the whey particles or whey powder particles sink to the bottom of the cyclone and are captured on the bottom;
- the hot air/process water vapour is mixed with a small amount of whey powder, and is blown horizontally by an amplifying centrifugal ventilator to the filters, where the remaining whey powder particles are captured; and where after
- the very hot air/water vapour mixture coming therefrom is blown to a cooled radiator system and is cooled, whereby the water vapour is converted with a yield of 90% in 8,923 kg liquid water and the dried air is blown away in the free air.
In practice this results in:
a) 83,250 kg water, that is elaborated by the condensation process,
b) 6,835 kg whey powder comprising 6,700 kg whey powder (98%) and 135 kg water (2%),
c) dry air from the air/water vapour cooling process, comprising 991 kg water, and
d) 8,923 kg produced water.
In total resulting in 92,174 kg purified water. So far this amount of water vapour is blown into the air.

The named amount of purified water of 92,174 kg is pumped into an aeration reactor, wherein sterile air is pumped through the purified/cleaned water to a oxygen level of 10 mg/l, where after it is stored in a 120,000 liter tank, and 100 liter ozone is added while stirring as disinfectant. Next the water is pumped through a 120,000 liter tank filled with active coal for the removal of possible odour, taste and colour, where after it is stored. From the storage the drinking water is mixed with flavours and sweeteners, and carbonised and pumped to a bottle-filling machine for filling of bio-compostable plastic bottles with a content of 1,5 liter, where after it is transported to a buyer.

### Example 3. Drinking water made from the process water released during the production of condensed milk (40%) from milk

100,000 kg milk, consisting of:
- 87,400 kg water and
- 12,600 kg milk constituents,
is concentrated by means of a two-steps film evaporation unit at a temperature of 80°C and a vacuum of 0,5 bar to 40% concentrate, with 40% solid matter consisting of:
- 12,600 kg milk constituents and
- 18,99 kg water.
The amount of water vapour is 87,400 - 18,900 = 68,500 kg process water.

The named amount of process water of 68,500 kg is horizontally transformed via a centrifugal ventilator by a cooled multi-layer radiator to a water condensate, and pumped to a storage tank. From the storage tank the process water is pumped to an aeration reactor, where normal outside air is pumped through the process water to an oxygen level of 10 mg/l, where after it is stored in a 90,000 liter tank, and where after 40 kg lactic acid (85%) as a disinfectant is pumped in the water, while stirring. Next the water is pumped through a 90,000 liter tank, filled with active coal for the removal of possible odour, taste and colour, where after it is stored. From this storage the drinking water is pumped to a bottle-filling machine, where two-layered plastic bottles prefilled with an inert gas with a volume of 0,10-3,0 liter are filled and transported to a distribution centre. These plastic bottles are bio-compostable within 160 days. As an alternative non-compostable bottles may also be used (including the transport thereof). The waste processing costs of non-compostable bottles however are considerably higher and emit large quantities of carbon dioxide in the environment.

### Example 4. Drinking water made from water vapour and water released during the fermentation of lactose in whey (from the cheese production) to lactic acid, including the concentration and purification

200,000 liter cheese whey comprising 4,9 % (9,800 kg) lactose is concentrated to a 11% lactose solution comprising 79,290 kg water and 9,800 kg lactose. For this 200,000 - 9,800 - 79,290 = 110,910 water was evaporated. This 11% lactose solution was fermented at a pH of 6.2 with the aid of the TAB 112 bacterium to lactic acid, resulting in 95% yield, or 9,310 kg lactic acid (100%), resulting in a 10.45% lactic acid solution in water and a considerable amount of lactic acid-strange compounds. For the separation and sedimentation of this 9,310 kg lactic acid, 4,000 kg calcium hydroxide is added, resulting in a sediment of 12,200 kg calcium lactate in the form of a slurry. After decantation (removal) of the water solution-fraction, the remaining 12,200 kg calcium lactate slurry (98/236) 5,066 kg sulfonic acid 98% is added, resulting in:
- a sediment of 12,400 kg calcium sulfate;
- a solution of 9,300 kg lactic acid as a 45% solution, comprising 11,400 kg water.
This 45% lactic acid solution is passed over a bed of active coal for the removal of the brown colour, followed by a concentration step by means of a damping-in installation to a 85% concentration, resulting in a mixture of:
- 9,300 kg lactic acid, and
- 1,641 kg water.
Of the original amount of water from the concentrated whey-solution, comprising 79,290 kg water, 79,200 - 1,641 = 77,649 kg water was removed, whereof 80% can be processed to purified process water and is suitable as a raw material for the processing to drinking water. The remaining 205 kg water remained bound to the calcium sulfate. From the total of 200,000 liter whey as such 110,910 + 77,649 =188,559 liter (from the total of 200,000 - 9,800 = 190,200) purified process water is obtained, a yield of 98%. This process water is now either blown in the air, or drained off in the sewer against high costs.

The named amount of process water of 188,559 kg, released during the production of lactic acid, is pumped to a aeration reactor, where sterile outside air is pumped through the process water to an oxygen level of 10 mg/l, where after it is stored in a 250,000 liter tank, and where after 60 liter chlorine gas is pumped in the water, while stirring as a disinfectant. Next the water is pumped through a 90,000 liter tank, filled with active coal for the removal of possible odour, taste or colour, where after it is stored. From this storage the drinking water is pumped to a storage tank and subsequently transported to a production facility for alcoholic beverages, and from this production it is filled in glass bottles with a content of 0.9 liter and provided with a label, and subsequently transported to a distribution centre.

### Example 5. Drinking water made from the water vapour and water released during the production of concentrated orange juice

100,000 kg fresh orange juice, comprising:
- 80,000 kg water, and
- 20,000 kg orange solids,
is concentrated by means of a two-steps film-evaporation unit at a temperature of 75°C and a vacuum of 0,1 bar to a 40% concentrate with 40% solids, comprising:
- 20,000 kg orange solids, and
- 30,000 kg water.
The amount of water vapour is 80,000 - 30,000 = 50,000 kg process water vapour, that is normally blown into the air.

Within this invention the named amount of 50,000 kg process water is horizontally blown via a centrifugal ventilator through a cooled multi-layered radiator to water and collected in a storage tank. From the transport to the storage tank the process water is pumped to an aeration reactor to an oxygen level of 24 mg/l, where after it is stored in a 75,000 liter cooled tank, where after, while stirring, 50 kg lactic acid (85%) is added as a disinfectant. Next the water is pumped through a 100,000 liter tank, filled with active coal, for the removal of possible odour and/or taste and/or colour, where after the water is stored in a 75,000 liter tank. From this storage the drinking water is pumped in a bulk tank for oversea transport to a production facility for the production of non-alcoholic beverages, and from this production is filled in a printed container of coated tin or aluminum, with a content of 50 cc and subsequently transported to a distribution centre.

### Example 6. Drinking water made from water vapour and water that is released during the processing of sugar beets to sugar

10,000 kg sugar beets from which the heads where removed and which are washed comprise:
- 7,500 kg water,
- 900 kg fibre, and
- 1,600 kg sugar.
These are subjected to the following processes:
i) cutting,
ii) extraction with warm water,
iii) sedimentation,
iv) evaporation,
v) centrifugation,
vi) crystallisation,
vii) drying, and
viii) cooling,
which eventually results in:
A) 1,500 kg sugar + 100 kg water - named crystal sugar,
B) 900 kg fibre + 800 kg water - named beet pulp,
C) 100 kg uncrystallised sugars + 200 kg water (named molasse), and
D) 6,400 kg water, that is blown into the air as vapour.

The total produced free amount of water vapour is 6,400 kg. This water vapour is blown via a centrifugal ventilator to a cooled multi-steps radiator, whereby the water vapour is converted in water and stored in a 10,000 liter tank, whereto 6 liter lactic acid is added as a disinfectant. After aeration the water is pumped to a 10,000 liter tank filled with active coal for the removal of possible odour, taste and colour, where after it is stored in a tank. After quality control drinking water is pumped from this storage to a bottle-filling machine, where glass bottles with a content of 1 liter are filled and transported to a distribution centre.

## Claims

1. Method for increasing the dry matter contents of a biological fluid comprising:
(i) providing a biological fluid;
(ii) heating the biological fluid, while forming water vapour and a concentrate of the biological fluid;
(iii) transporting away of the concentrate, **characterized in**,
(iv) forming of a water condensate from the water vapour;
(v) transporting away of the water condensate for further processing to a water containing product.

2. Method according to claim 1, wherein the processing of the water condensate comprises purification.

3. Method according to claim 2, wherein the purification comprises a technique selected from the group of filtration, such as ultra filtration, micro filtration, nano filtration; evaporation; freeze concentration; sedimentation; demineralisation, such as electro dialyses, osmosis, or a combination thereof.

4. Method according to any of the previous claims, wherein forming of water vapour is accomplished by spray drying the biological fluid.

5. Method according to any of the claims 1-3, wherein forming of water vapour is accomplished by concentrating the biological fluid in a film evaporator, such as a plate evaporator with multiple plates, a centritherm evaporator, a band dryer or a roller dryer.

6. Method according to any of the previous claims, wherein the method further comprises separation of water and a number of water strange compounds in the gas phase that comprises the water vapour.

7. Method according to any of the previous claims, wherein (micro) powder is separated from the gas phase that comprises the water vapour.

8. Method according to claim 6, wherein the separation is accomplished on the basis of differences in the boiling point of water and the number of water strange compounds.

9. Method according to any of the previous claims, wherein the water condensate is processed to drinking water.

10. Method according to any of the previous claims, wherein processing of the water condensate comprises packing of the water condensate, preferably in a bio-compostable package.

11. Method according to any of the previous claims, wherein processing of the water condensate comprises adding a antimicrobial compound, such as lactic acid, to a level that provides an antimicrobial effect.

12. Method according to any of the previous claims, wherein the biological fluid is a biological consumption fluid, preferably selected from milk or a plant juice, such as fruit juice or vegetable juice.

13. Method according to any of the previous claims, wherein the biological fluid is a concentrated milk fluid.

14. Method according to any of the previous claims, wherein processing of the water condensate comprises distribution via a network of piping.

15. Method according to any of the previous claims, wherein processing of the water condensate comprises removing dust particles and essentially dust free packing of the water condensate.

16. Method according to any of the previous claims, wherein the concentrate that is transported away is further processed to a product.

17. Device for increasing the dry matter content of a biological fluid, comprising:
- an evaporation unit suitable for forming water vapour from a biological fluid;
- a cooling unit suitable for forming a water condensate from the water vapour formed in the evaporation unit, **characterized in that** the device further comprises a processing unit for processing of the water condensate to a water product.

18. Device according to claim 17, wherein the evaporation unit comprises one or more selected from the group of a film evaporator, such as a plate evaporator with multiple plates, a centritherm evaporator, a band dryer or a roller dryer; or a spray dryer.

19. Device according to any of the claims 17-18, wherein the processing unit comprises a purification unit, such as selected from the group of a filtration unit, an ultra filtration unit, a micro filtration unit, such as an ultra filtration-unit; a freeze concentration-unit; a sedimentation unit; or a demineralisation unit, such as an osmosis-unit.

20. Device according to any of the claims 17-19, wherein the processing unit comprises a packing unit for packing of the water condensate in consumer packages.

21. Device according to any of the claims 17-20, wherein the processing unit comprises a packing unit for dust free and/or airtight packing of the water condensate, optionally under a preserving atmosphere of CO₂ or an inert gas.

22. Device according to any of the claims 17-21, further comprising a unit for separating water and a number of water strange compounds in the gas phase comprising the water vapour.

23. Device according to any of the claims 17-22, wherein the separation unit is designed for separation of (micro) powder from the gas phase.

24. Device according to any of the claims 17-23, wherein the separation unit is designed for separating water and one or more water strange compounds on the basis of a difference in boiling point.

25. Water condensate obtainable by the method according to any of the claims 1-16.

26. Use of water vapour, obtainable from a concentration process of a biological fluid, for producing a water product.

27. Use according to claim 26, wherein the biological fluid is a biological consumption fluid, preferably selected from milk or a plant juice, such as fruit juice or vegetable juice.

28. Use according to claim 26, wherein the biological fluid is a concentrated milk fluid.

29. Use according to any of the claims 26-28, wherein the water product is drinking water.

30. Use according to any of the claims 21-29, wherein the water product is water with a conductivity smaller than 2 µS/cm (T=20°C), preferably smaller than 0,5 µS/cm (T=20°C).
